# EUROPEAN PATENT SPECIFICATION

(11) **EP 2 478 781 B1**
(45) Date of publication and mention of the grant of the patent: **09.07.2014**
(21) Application number: 12150449.2
(22) Date of filing: 09.01.2012
(51) Int. Cl.: A23P 1/08, A23L 1/00, A23L 1/36

(54) **Method And Unit for Saucing Dried Nuts With Diffusion by Means of Salinisation, Saccharisation or Aromatisation**
Verfahren und Einheit zum Einsoßen von Trockenfrüchten mittels Diffusion durch Salzung, Zuckerung oder Aromatisierung
Procédé et unité de sauçage de noix sèches avec une diffusion par salinisation, saccharisation ou aromatisation

(30) Priority: 13.01.2011 TR 201100345
(43) Date of publication of application: 25.07.2012
(73) Proprietor: Ceselsan Makina Sanayi ve Ticaret Anonim Sirketi, Giresun (TR)
(72) Inventor: GURSOY, Cem Celal, GIRESUN (TR)
(74) Representative: Iskender, Ibrahim

(56) References cited:
- FR-A- 1 564 209
- US-A- 713 918
- US-A- 4 085 230
- US-A- 4 206 246
- US-A- 4 515 820
- US-A- 5 939 119
- US-A1- 2010 310 739

## Description

### The Related Art

The invention relates to a unit for saucing dried nuts with diffusion by means of salinisation, saccharisation or aromatisation in order to give taste to dried nuts and similar products prior to drying and roasting.

### Prior Art

Shelled and unshelled dried nuts are sweetened in a variety of ways. First of all, they are subjected to processes such as salinisation or saccharisation or giving aromatic taste comprising blends of various spices. Dried nuts and dried fruits, as the name suggests, are also subjected to processes such as drying or roasting. After these processes, dried nuts and similar dried fruits are made ready for consumption.

Sometimes a coating having a certain taste is formed on the outer surfaces of dried nuts and of similar items. The process is carried out through addition of the blend into the semi-finished item in the aftermath of preparing it manually in other environments independent of this container while the product in semi-finished form is in a container, to perform various processes such as sweetening by means of salinisation, saccharisation or spices. In this type of mechanisms, dried nuts are placed in a container for example for the process of salinisation the dried nuts. Subsequently, a mixture of water and flour amounts of which are adjusted manually are created in another container. After said mixture is poured into the dried nuts container, addition of salt is made manually and preliminary preparation process for salinisation is completed. A processing method of mentioned type leads to losses of time and labour particularly in production sites wherein there is a serial production going on. In addition, ranges of tolerance for scaling the components of the mixture become wide because addition of the components of mixture is made by the manufacturing person, therefore a product standard can not be achieved. Furthermore, the existing production method is not hygienic because there is direct personal intervention in the product. As the production volume grows, the product mixing rates decline.

Improvements are seen in the literature in this area. One of them belongs to the applicant named in this file. In the patent with file no TR 200401297; a preliminary preparation to apply a mixture based process to the products, such as dried nuts, outer surfaces of which are appropriate for treatment. The mechanism is a preliminary preparation for processing dried nuts, comprising at least one mixture material inlet opening and a product inlet opening, also comprising a processing container having a mixing unit connected with an actuating instrument; also comprising at least one additional mixing unit also having at least one liquid inlet opening to create mixture constituent and mixture constituent inlet opening, also opening to the processing container through said mixture material inlet opening. This invention has been realised to automate the preliminary preparation processes of dried nuts, creating a hygienic environment.

Operation logic of the mechanisms in the prior art is as follows: Salinisation of dried nuts is realised by means of adherence of the salt to the surface of the product. To that effect, after outer surfaces of the dried nuts are coated with floury juice, salt or taste is added into them. With this method, only the adherence of salt or taste to the outer surface of the product is achieved. However, certain drawbacks emerge in the processes such as Salinisation, saccharisation or aromatic sweetening using spice seasoning of dried nuts by means of existing methods. These can be listed as follows;
- Saltiness is achieved only on the surface of the product and is not homogeneous,
- Floury salt depositions on the surface of the product give rise to a bad image,
- Visual pollution is created by the salt particles of this floury juice failing to adhere, while achieving partial adherence of the salt onto the product, depositing as excess at the bottom of the package,
- The use of flour, as binder, for adherence of the salt to the surface shorten the shelf life of the product,
- Most importantly, the product can not be sweetened homogeneously because the interior of the product's grain can not be salinised / aromatised,
- Shell of the product takes a different colour because the moisture of the product's shell and the interior of the shell are not the same.

Presence of the need for a unit that overcomes said shortcomings in the prior art and provides giving taste such as salt, sugar, sauce to dried nuts in a hygienic and problem-free way, and inadequacy of the existing solutions have made it mandatory to make an improvement in the respective related art.

One of the documents which we found during search in the literature is;

Patent application numbered US 4206246(A). The abstract is: Flavoring peanuts by impregnating the peanut meat with a selected flavoring material mixed with water just below boiling and in which the peanut is permitted to soak from 100 to 150 seconds to absorb approximately 10% of the mixture of flavoring material and water and subsequently cooking the flavored nuts.

Patent application numbered US 5939119(A). The abstract is: A process for coating nuts which comprises immersing the nuts in a molten edible material which is solid at ambient temperature to coat the nuts with molten edible material, separating the excess molten edible material and then cooling the coated nuts to solidify the molten edible material.

Patent application numbered US 4515820(A). The abstract is: A method for coating and infusing nut products with honey-sucrose solution for roasting, which method consists essentially of the steps of (1) preparing a solution comprising 50%-70% by weight sucrose, 10%-20% by weight honey and the balance water, (2) heating the solution to no greater than the soft-ball stage, (3) coating shelled nuts with the solution until the nuts become at least partially saturated with the solution, (4) drying the coated nuts at least to where there is no excess solution left to interrupt a subsequent roasting process, and (5) roasting the coated nuts until they have a golden brown transparent glaze.

Patent application numbered US4085230 (A). The abstract is: In abstract, a preferred embodiment of this invention is an improved roasted type peanut product and the process by which it is produced. The process includes precooking the peanuts in boiling water with a color additive ingredient, removing the peanuts and placing them in hot vegetable oil for a predetermined period of time, removing the same, coating with a light film of oil and salting the same. The product has a longer shelf life and is of a much more palatable taste than what would ordinarily be expected.

### Purpose of the Invention

The invention relates to a unit appropriate for performing a method for giving taste such as salt, sugar, sauce to dried nuts in a hygienic and problem-free way based on the prior art.

Purpose of the invention is to give taste such as salt, sugar, sauce to dried nuts with diffusion; thus, give taste to dried nuts not only by the outer surface of theirs but also up to the inner cavities of the grains.

Purpose of the invention is to provide achievement of sweetening operations offset prior to drying or roasting processes of dried nuts, thanks to sweetening with diffusion unit comprising ideal system or machinery or equipments required for sweetening operations.

A purpose of the invention is to provide achievement of bringing dried nuts to the system in a controlled way, thanks to the feeding system the sweetening unit owns.

A purpose of the invention is to provide penetration of various tastes, salty, sugary or spicy ones chief among them, up to internal structures of the grains thanks to the sweetening pool through diffusion the sweetening unit of dried nuts owns.

A purpose of the invention is to provide homogeneous salinisation, saccharisation or aromatisation of the shell of the product and of the grain prior to roasting, thanks to roasting of dried nuts inside of the solution pool with diffusion the sweetening unit of dried nuts owns at a certain temperature degree.

A purpose of the invention is to provide, thanks to sweetening of dried nuts with diffusion method, the product to maintain robustness for a long time and that no rancid occurs. In addition, with this method, the product is not quick-frozen during the roasting process which is the next step, because the product goes through a boiling process on the solution pool at a temperature of 100° or higher.

### Description of the Figures

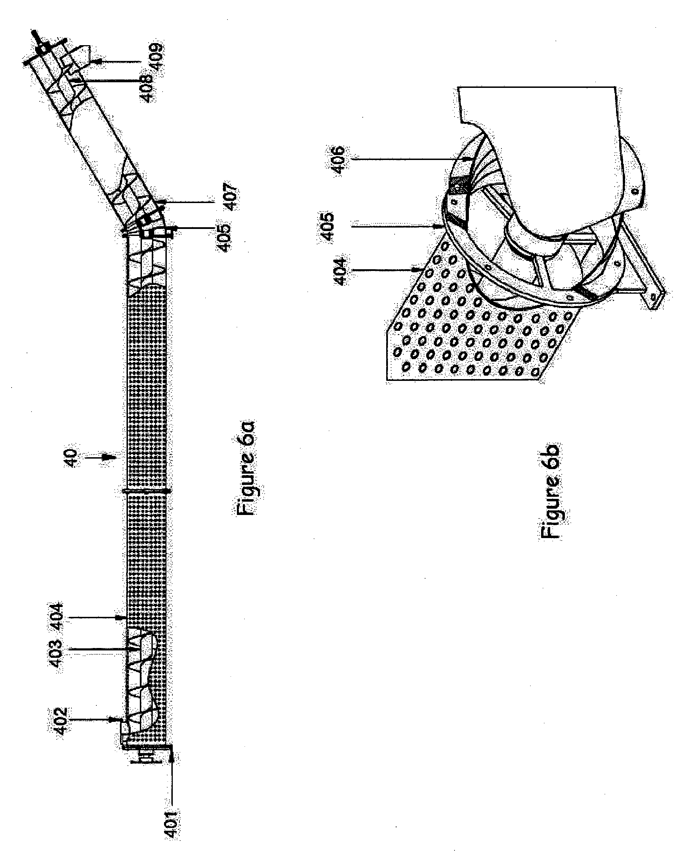

Figure-1; side view of the entire dried nuts preparation system wherein the unit of sweetening with diffusion in a representative application of the invention.
Figure-2a; front perspective view of the heated boiler the unit of sweetening with diffusion in a representative application of the invention
Figure-2b; front perspective view, wherein exchanger pipes of the heated boiler group of the unit of sweetening with diffusion are illustrated by the cut part in a representative application of the invention
Figure-2c; rear perspective view of the heated boiler group of the unit of sweetening with diffusion in a representative application of the invention
Figure -3; front perspective view of the screw conveyor group the unit of sweetening with diffusion in a representative application of the invention
Figure -3a; side two - dimensional (A-A cross-sectional) view of the screw conveyor group the unit of sweetening with diffusion in a representative application of the invention.
Figure-3b; rear two - dimensional view of the screw conveyor group the unit of sweetening with diffusion in a representative application of the invention
Figure-3c; top two - dimensional view of the screw conveyor group the unit of sweetening with diffusion in a representative application of the invention
Figure-4; front perspective view of the heated boiler group of the unit of sweetening with diffusion and of the screw conveyor group over it in a representative application of the invention
Figure-5; front perspective view of a closed picture of the screw entry group in a representative application of the invention
Figure-5a; front perspective view of an open picture of the screw entry group in a representative application of the invention
Figure-6a; side two-dimensional view of one of the permeable pipes comprising screw conveyor
Figure-6b; detailed view of the elbow of the permeable pipe-elbow-outlet pipe in Figure 6a
Figure-7; front perspective view of the dipped conveyor group in an alternative application of the unit of sweetening with diffusion according to the invention
Figure-8; side two-dimensional view of the palletised conveyor group in an alternative application of the unit of sweetening with diffusion according to the invention
Figure-9a; side two-dimensional view of the filtering group connected with the heated boiler group
Figure-9b; cross-sectional and side perspective view illustrating flow direction of the solvent to be filtered over the filtering group
Figure-10a; representative view of dried nuts not yet thrown into the solution pool in the heated boiler group
Figure-10b; representative view of dried nuts diffused in the solution pool in the heated boiler group

### Reference Numbers

a. Dried nuts
b. Dried nut grain
c. Dried nut shell
d. Intragranular cavity

A. Raw material preparation unit
B. Unit of sweetening with diffusion
C. Drying and roasting unit

10. Raw material preparation group
100. Lift
101. Salt mixing chamber
102. Preparation tank
103. Stock tank
104. Vibratory raw material inlet bunker
105. Conveyor

20. Feeding system
200. Screw inlet group
2001. Bunker
2002. Inlet pipe
2003. Cover
2004. Reducer motor
2005. Bearing
2006. Shaft
2007. Feeding screw
2008. Flange
201. Feeding bunker

30. Heated boiler group
300. Boiler
301. Overflow pipe
302. Liquid outlet pipe
303. Exchanger
304. Flange
305. Burner
306. Separator
307. Expansion tank
308. Solution pool
40. Screw conveyor group
401. Leg
402. Screw conveyor inlet
403. Conveyor screw
404. Permeable pipe
405. Flange
406. Elbow
407. Outlet pipe
408. Outlet screw
409. Outlet stream

50. Dipped conveyor group
500. Immersion bucket

60. Palletised conveyor group
600. Pallet
601. Conveyor

70. Filtering group
700. Filter
701. Filter roll
702. Foul filter
703. Shaft
704. Foul solution inlet
705. Clean solution outlet
706. Foul filter roll

### Detailed Description of the Invention

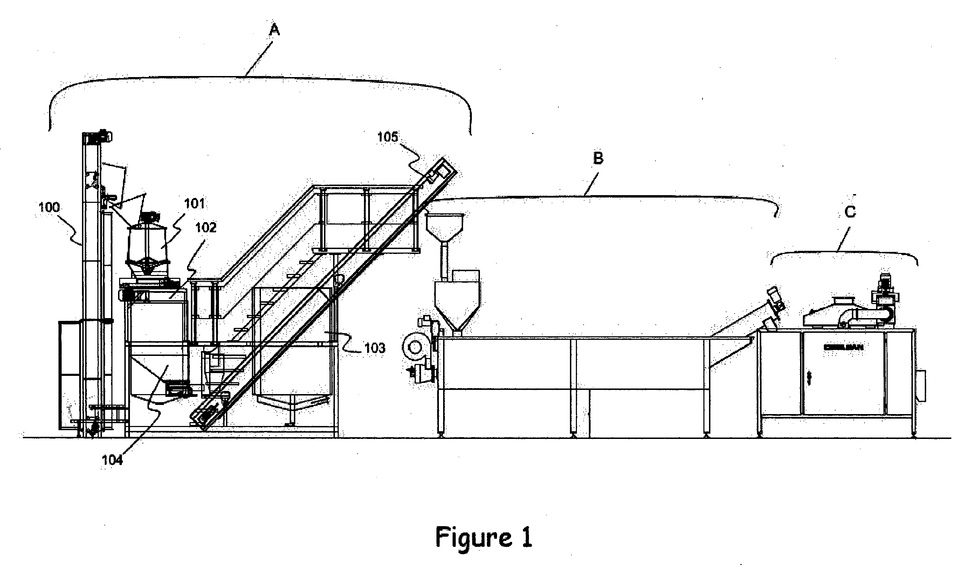

The invention is unit (B) of salinisation / sweetening with diffusion to which dried nuts are subjected to prepare for roasting that provides it to have taste in the process of coating, salinisation and saccharisation. The unit (B) of salinisation / sweetening with diffusion is a unit belonging to dried nuts preparation system. The dried nuts preparation system is comprised of raw material preparation unit (A), unit (B) of sweetening with diffusion and of drying and roasting unit (C) (Figure 1).

The raw material preparation unit (A) that can also be found in the prior art comprises lift (100) by which salinisation or sweetener is carried; salinisation/sweetening mixing chamber (101); salinisation/sweetener aqueous or oily solution preparation tank (102); solution stock tank (103); vibratory raw material inlet bunker (104) wherein on the other hand dried products are to be taken from, and conveyor (105) elements that carry dried products to the unit (B) of sweetening with diffusion according to the invention. The main elements are raw material preparation group (10) elements. At the head part of dried nuts preparation system, there is raw material preparation unit (A), while at the end part there is drying and roasting unit (C) (Figure 1). The unit (B) of sweetening with diffusion according to the invention is located in the middle part of this system (Figure 1).

The unit (B) of sweetening with diffusion comprises heated boiler group (30) comprising solution pool (308) (Figure 2a, 2b, 2c). 3 different systems of heated boiler group (30) can be setup on the heated boiler group (30) to immerse or dip the products into the solution pool (308). These are the screw conveyor group (40), the dipped conveyor group (50) and the palletised conveyor group (60) (Figure 3-8). The oily or aqueous liquid in said solution pool (308) is filtered through a filter (700) for cleaning. For this, filtering group (70) has been set up immediately next to said heated boiler group (30) (Figure 9a).

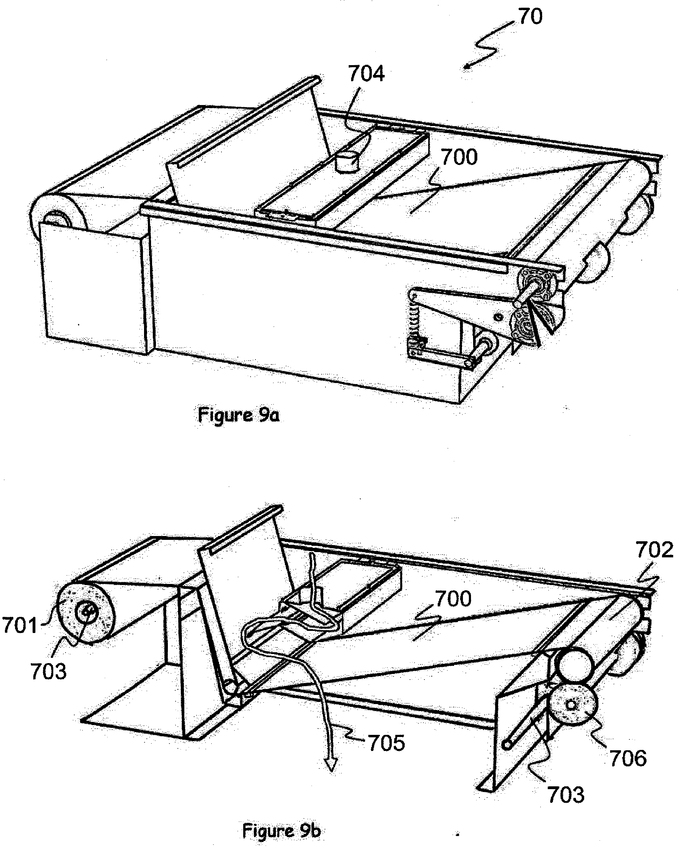

The filter (700) of said filtering group (70) filters the pulp solution flowing from the foul solution inlet (704) (Figure 9b). In the event of an occlusion in the filter (700), water rising at the foul water outlet (704) in form of a chamber is detected with level control sensor. Subsequently, the foul filter (702) is winded to the foul filter roll (706), automatically crossing over the shaft (703). After the foul filter (702) is winded, a new and clean filter (700) is brought from the filter roll (701) by means of the rotating shafts (703). The filtered solution is taken from the clean solution outlet (705). After being taken, its circulation to the solution pool (308) is provided.

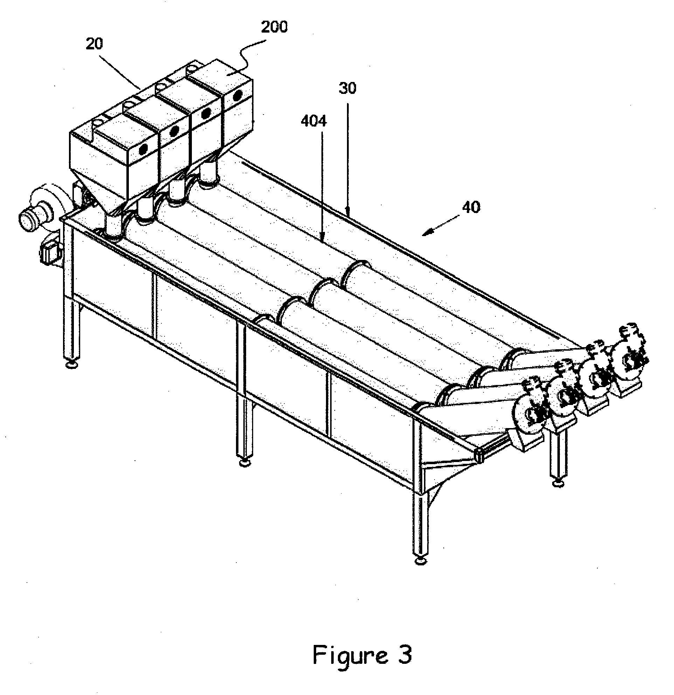

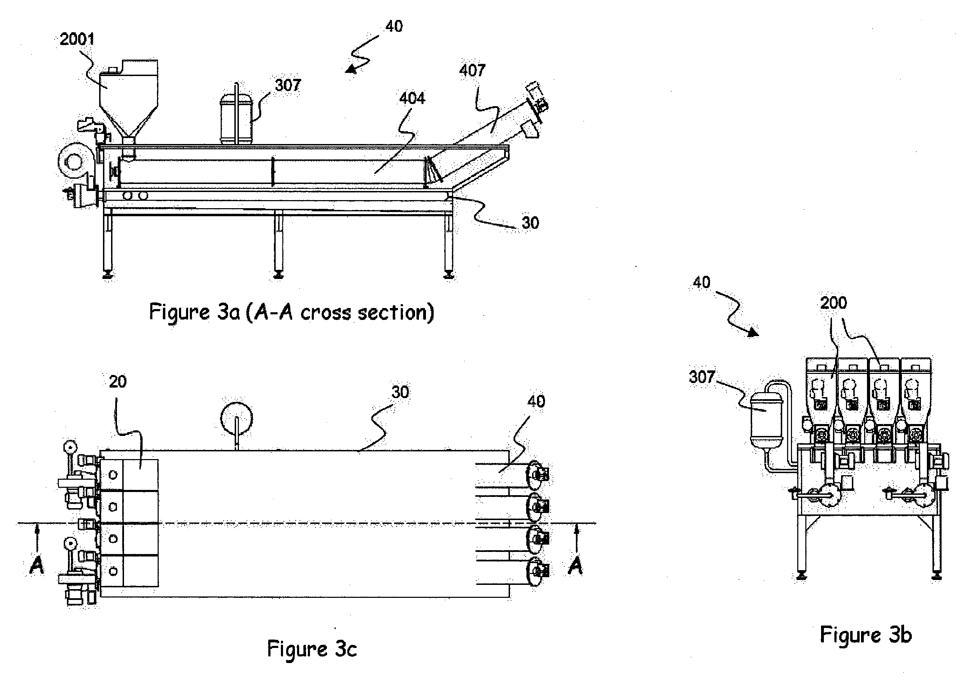

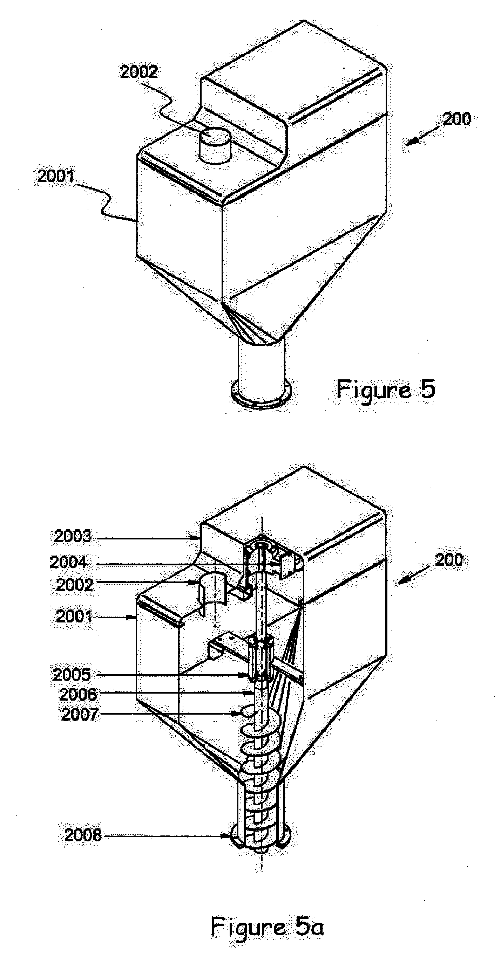

At the head part of said screw conveyor group (40), there is the screw conveyor group (200) as the product feeding system (20) (Figure 3). The screw conveyor group (200) comprises, at least 1 bunker (2001), preferably at least 4 bunkers (2001). (Figure 5). In the upper part of said bunker (2001), there is the cover (2003); dried product inlet pipe (2002); feeding screw (2007); one shaft (2006) with which said feeding screw (2007) is connected; and one bearing (2005) that the shaft (2006) passes through; and a reducer motor (2004) from which the shaft (2006) is driven. In the location where said feeding screw (2007) falls down, there is a flange (2008) at the place where said bunker (2001) will be connected with the permeable pipe (404) having conveyor screw (403) (Figure 5a).

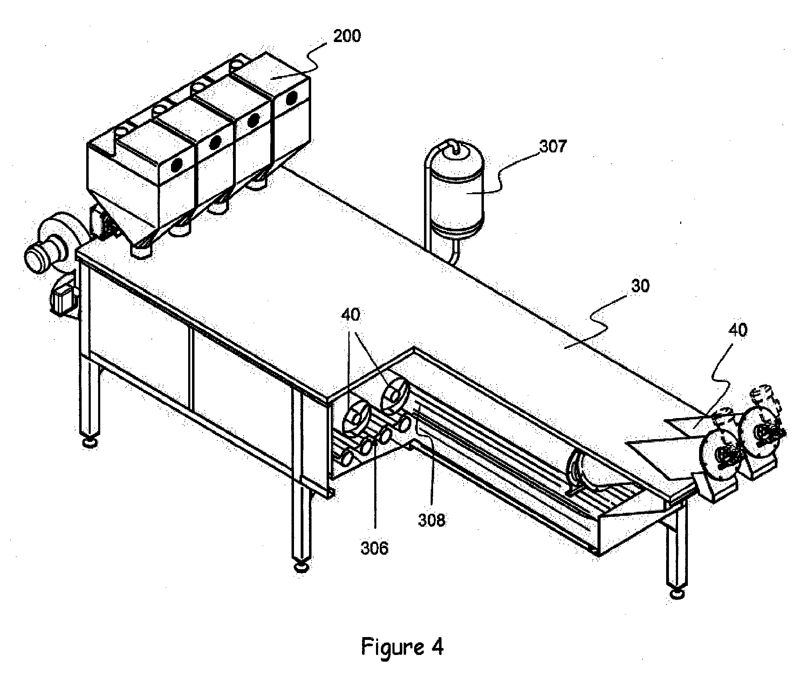

The system conveying dried products into the solution pool (308) inside of the heated boiler group (30) is the screw conveyor group (40). The screw conveyor group (40) comprises, at least one, preferably 4 pieces of conveyor screw (403) each one of which comprising one bunker (2001) (Figure 3a, 3b, 3c). The permeable pipe (404) which the conveyor screw (403) passes through is located in parallel to the solution pool (308) inside of the heated boiler group (30) (Figure 4). The leg (401) that provides this location is connected at the head part of the permeable pipe (404) (Figure 6a). Screw conveyor inlet (402) to which dried products that will be coming from the top, from the bunker (2001) will go into has been formed. The products passing through said permeable pipe (404) and sweetened by means of being kept waiting in the solution pool (308) are transferred, after this part, to the product drying and roasting unit (C) by means of the outlet pipe (407). The elbow (406) and the flange (405) between the permeable pipe (404) and the outlet pipe (407) provide the connection (Figure 6b). The outlet pipe (407) slopes upward and has an unperforated surface. The screw conveyor (408) inside of it conveys the sweetened dried nuts to the outlet flow (409). Dried nuts sweetened with diffusion are transferred in wet form from this outlet flow (409) to the drying and roasting unit (C) (Figure 1).

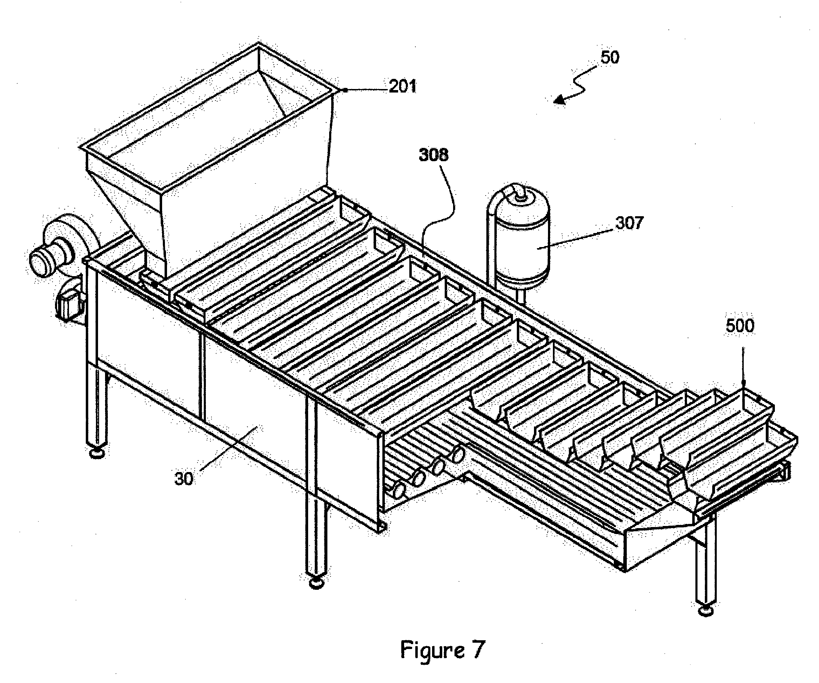

A further conveyor system alternative to said screw conveyor group (40) is the dipped conveyor group (50) comprising feeding bunker (201) (Figure 7). The dipped conveyor group (50) comprises more than one perforated immersion buckets (500) lined up in parallel to one another. The dipped conveyor group (50) runs on the chain pulley system. Each one of the immersion buckets (500) is immersed in the solution pool (308) inside of the heated boiler group (30), kept on waiting for some time, conveyed later upward.

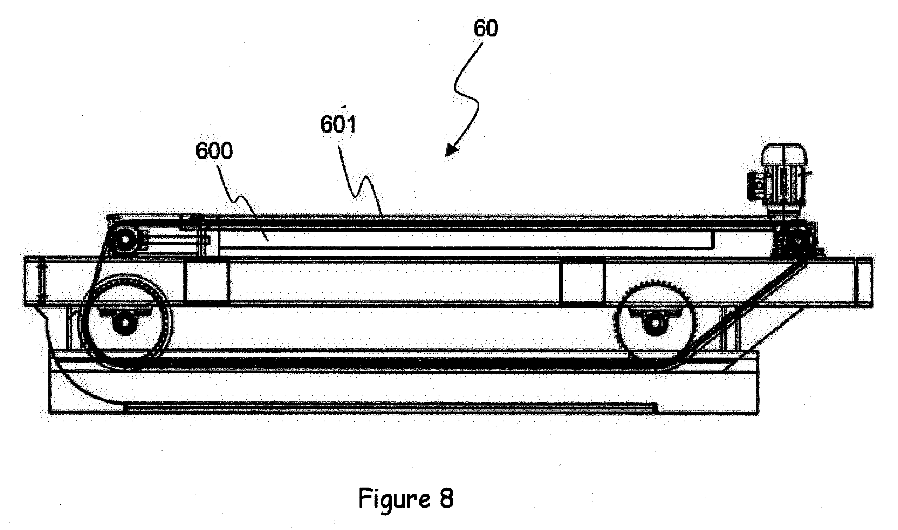

A further conveyor group system of a sweetening unit (C) alternative to said screw conveyor group (40) is the palletised conveyor group (60) (Figure 8). It is a system that takes, by means of a rotating conveyor (601), the product in a form with pallets (600) in desired sizes and heights or numbers mounted - on in block, immersing it in the solution pool (308).

The logic that has conveying dried products into the solution pool (308) inside of the heated boiler group (30), immersing, salinisation/sweetening them through diffusion at a certain temperature with specific time intervals is valid for said each conveyor system. For this, the desired salt, taste or aromatisation, aqueous or oily solution is available inside of the solution pool (308). The aqueous or oily solution is prepared in the raw material preparation unit (A). From there, it is transferred to the stock tank (103). It can be transferred from said stock tank (103) into the solution pool (308) at desired time and in desired amount (Figure 1).

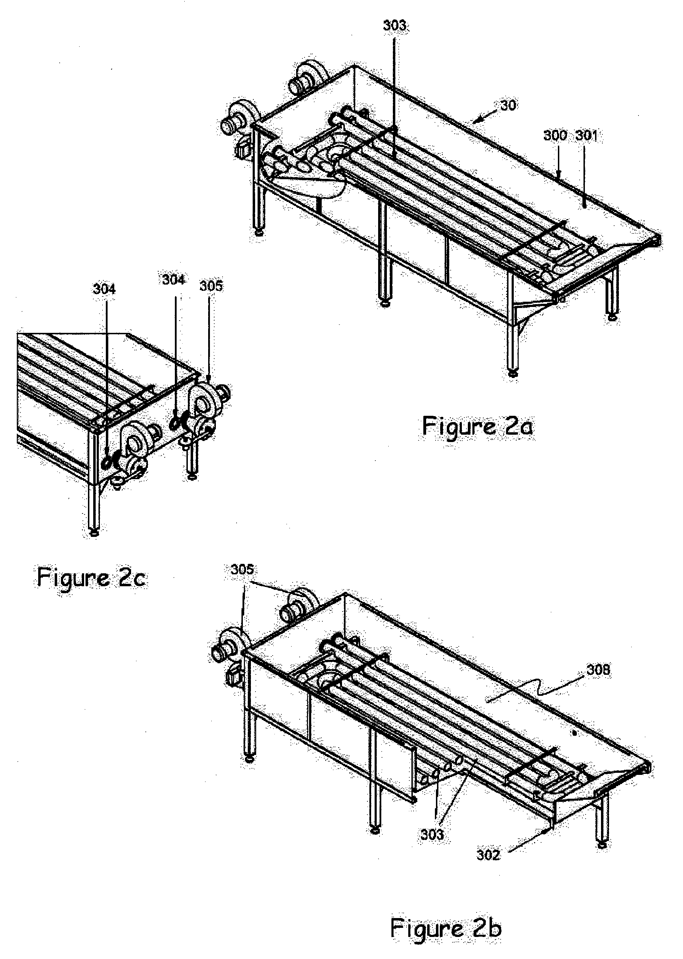

Heat inside of the heated boiler group (30) is provided by the flanged (304) burners (305) and the associated exchangers (303) (Figure 2a, 2b, 2c). Exchangers (303) are in form of pipes contained in the solution pool (30) of the heated boiler group (30). They heat up the aqueous or oily solution in the solution pool (308). The industrial oil heated up by theirs becomes hot. Because the hot oil will give damage to dried nuts products, a separator (306) has been positioned into the solution pool (308) in form of parallel curtain products (Figure 4). In the upper part of said separator (306), aromatisation - frying oil is found. The separator (306) transmits the heat up to the frying oil at lower temperatures. The heated oil expands for some time later. For the expanding oil, an expansion tank (307) has been positioned next to the boiler (300). The expanding oil is re-delivered to the system through the expansion tank (307). An overflow pipe (301) has been formed in the upper parts of the boiler (300) to which aqueous or oily solution, when overflow, can be transferred (Figure 2a). In the bottom part of the boiler (300), a liquid outlet pipe (302) to which foul aqueous or oily solution can be transferred has been formed (Figure 2b).

Because the permeable pipe (404) or immersion bucket (500) or pallet group (600) have perforated surfaces, frying oil or aqueous solution passes through these holes, penetrating into the grains of dried nuts. Thus, dried nuts are sweetened with diffusion in desired sense of taste as salty, sweet or aromatised form.

Solution of said solution pool (308) is prepared in the solution preparation tank (102) and is pumped up into the solution pool (308) by means of the pumps. Appropriate solution is prepared to provide the desired taste according to the type of dried nuts. For salinised dried nuts, salina solution is prepared. For sugary one, saccharised solution; for savoury one, spicy solution is prepared.

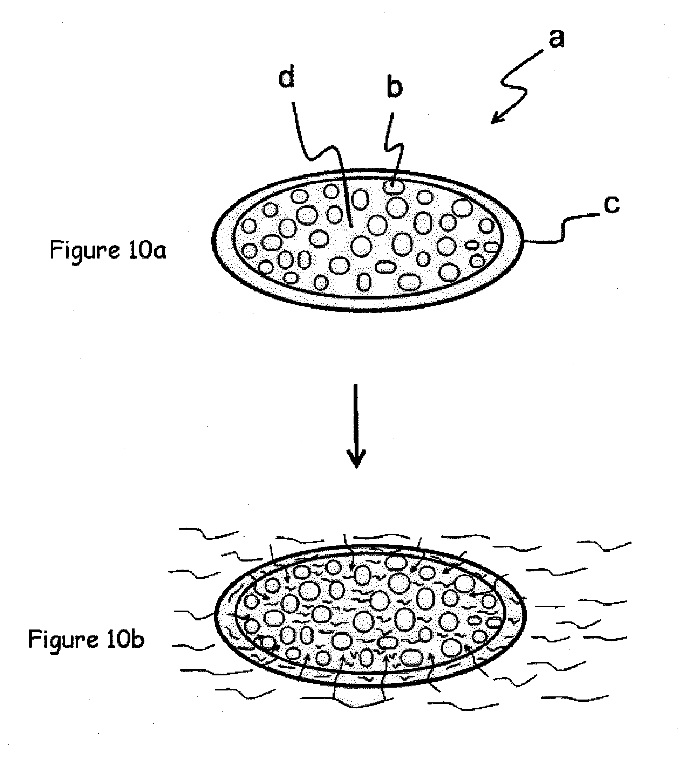

Dried nuts in the solution pool (308) are kept on waiting inside of the solution at a certain temperature for a certain time. Meanwhile, dried nuts (a) are both boiled and assimilate the solution into the structure. Dried nuts (a) get the moisture both up to the shell (c) and the inner grains (b) (Figure 10b). At the same time, they become tasteful. Before dried nuts (a) are admitted to the solution pool (308), intragranular cavities of theirs (d) are in form of dry pores (Figure 10a).

Because salina solution or saccharised solution or aromatic taste is diffused up to the inside of the product's grain (b) including intragranular cavities (d), the intragranular (b) moisture of dried nuts and the moisture of the shells (c) of dried nuts are close to one another. Peroxide does not form inside the oil because the oil of product does not liberate during roasting. Therefore, the product both preserves its robustness for a long time and no rancidity occurs. The product is not in shocked form during the roasting process of itself because the product has already gone through the process of being diffused by means of boiling in the solution pool at about 100°C or above 100°C, or it has gone through the process of being diffused by means of being fried in hot oil.

The process of sweetening with diffusion realised in the unit (B) of sweetening with diffusion according to the invention is a pre-treatment realised prior to drying or roasting of the products such as dried nuts or dried fruits. Thanks to this process, the product's structure and shell have the same amounts of moisture, with taste provided homogeneously.

In alternative embodiments of the invention, the sugar/water or salt/water or spice aroma/water ratios of the solution prepared in side of the solution preparation tank (102) of the unit (B) of sweetening with diffusion can be arranged.

## Claims

1. Unit (B) of salinisation-sweetening with diffusion, for remaining between a raw material preparation unit (A) and a drying and roasting unit (C), positioned in dried nuts preparation system, giving dried or roasted food products such as dried fruits, dried nuts salty or sugary or spicy aromatic taste by means of the method of diffusing the solution up to the interior of the grains, and comprising;
- a feeding system (20) that, in use, comes from said raw material preparation unit (A) and provides feeding of the dried nut product with shell, that will be processed into dried nuts, to the unit (B) of sweetening with diffusion in certain amount and with specific time intervals,
- a heated boiler group (30) that comprises at least one boiler (300) comprising a solution pool (308) inside of which boiling operation of dried product by the process of sweetening or salinisation with diffusion occurs,
- a conveyor group that conveys, by being positioned on said heated boiler group (30), dried products into the solution pool (308), processing them inside of the solution pool (308) and, in use, conveys dried products to the product drying and roasting unit (C),
and **characterized in that**;
- said heated boiler group (30) comprises burners (305) connected with the flanges (304) providing heating up of the solution pool (308) inside the boiler (300); and exchangers (303) heated up by said burners (305),
- said heated boiler group (30) comprises an expansion tank (307) providing transfer of the heated oil by means of overflowing from the boiler group (30) due to expansion in the event of presence of oil / oily flavouring agent / solution,
- said heated boiler group (30) comprises a separator (306) providing separation of hot oil and food oil because hot oil will give harm to dried nut products,
- said heated boiler group (30) comprises an overflow pipe (301) in the upper parts of the boiler (300) into which aqueous or oily solution can be transferred when it overflows, and in the bottom part of the boiler (300), said heated boiler group (30) comprising a liquid outlet pipe (302) to which the foul oily or aqueous solution can be transferred,
- said conveyor group comprising a screw conveyor group (40) having; at least one screw conveyor inlet (402) to which dried product is to be admitted; at least one conveyor screw (403) that takes dried product into the solution pool (308) by means of force, using driving force; at least one permeable pipe (404) that comprises holes providing interaction of dried product with solution pool (308) and said conveyor screw (403) of which is in the inside of its; an outlet pipe (407) that provides both filtering and transportation of the juice of the wet product passing through said permeable pipe (404), and is connected with the permeable pipe (404); an elbow (406) that provides connection of said permeable pipe (404) and the outlet pipe (407) with one another and provides inclination; at least one flange (405) that provides intermediate connection of said pipes (404, 407) and the elbow (406) or said conveyor group comprising a dipped conveyor group (50) having at least one immersion bucket (500) with perforated surface or said conveyor group comprising palletised conveyor group (60) having at least one pallet (600) with perforated surface.

2. Unit (B) of salinisation-sweetening with diffusion according to Claim 1 and **characterized in that** said feeding system (20) comprising at least one screw inlet group (200), appropriate for said conveyor group (40) and suitable for providing transfer of dried product coming from said raw material preparation unit (A) to said screw conveyor group (40) of unit (B) of salinisation-sweetening with diffusion.

3. Unit (B) of salinisation-sweetening with diffusion according to Claim 1 and **characterized in that** said screw inlet group (200) comprises:
- a bunker (2001) comprising at least one inlet pipe (2002) to which dry product is to be admitted,
- a cover (2003) blanketing the top of the bunker (2001) in the upper part,
- a feeding screw (2007) driving dry product inside of the bunker (2001) by force,
- a shaft (2006) with which the feeding screw (2007) is connected,
- a bearing (2005) providing fixing of said shaft (2006) inside of the bunker (2001),
- a reducer motor (2004) providing actuation to rotation of said shaft (2006),
- a flange (2008) providing connection from the outlet part of said bunker (2001) to said screw conveyor inlet (402).

4. Unit (B) of salinisation-sweetening with diffusion according to Claim 1 and **characterized in that** immersion buckets (500) which said dipped conveyor group (50) comprises; are immersion buckets (500) which convey with a chain conveyor connected by the side parts lined up next to one another.

5. Unit (B) of salinisation-sweetening with diffusion according to Claim 4 and **characterized in that** said dipped conveyor group (50) comprising at least one feeding bunker (201) which, in use, feeds dry product taken from the raw material preparation unit (A) to said immersion buckets (500).

6. Unit (B) of salinisation-sweetening with diffusion according to Claim 1 and **characterized in** said palletised conveyor group (60) comprising a conveyor (601) providing transportation of said pallet(s) (600) by means of being moved.

7. Unit (B) of salinisation-sweetening with diffusion according to Claim 1 and **characterised in** comprising filtering group (70) providing cleaning of the solution found in the solution pool (308) inside of said heated boiler group (30).

8. Unit (B) of salinisation-sweetening with diffusion according to Claim 7 and **characterised in that** said filtering group (70) comprises;
- a foul solution inlet (704) for providing entry of pulp solution coming from the solution pool (308) into the system,
- a filter (700) for filtering the foul solution,
- a foul filter roll (706) that the foul filter (702) is winded to, automatically crossing over the shaft (703) in the event that there occurs an occlusion in said filter (700),
- rotating shafts (703) providing clean and new filter (700) being brought from the filter roll (701) after the foul filter (702) is winded,
- a clean solution outlet (705) for providing exit of filtered solution into the solution pool (308) for circulation.

## Patentansprüche

1. Einheit (B) zum Salinieren/Süßen mit Diffusion, um zwischen einer Rohmaterialzubereitungseinheit (A) und einer Trocknungs- und Rösteinheit (C) zu bleiben, positioniert in einem Trockennuss-Zubereitungssystem, die getrockneten oder gerösteten Lebensmitteln, wie beispielsweise getrockneten Früchten, getrockneten Nüssen mithilfe des Verfahrens der Diffusion der Lösung bis zum Inneren der Körner einen salzigen oder zuckrigen oder würzigen aromatischen Geschmack gibt und Folgendes umfasst:
- ein Zufuhrsystem (20), das im Gebrauch von der Rohmaterialzubereitungseinheit (A) kommt und eine Zufuhr des Trockennussproduktes mit Schale, das zu getrockneten Nüssen verarbeitet wird, zu der Einheit (B) zum Süßen mit Diffusion in bestimmten Mengen und in bestimmten Zeitabständen bereitstellt,
- eine Heizkesselgruppe (30), die mindestens einen Kessel (300) umfasst, der einen Lösungspool (308) umfasst, in dem der Kochvorgang von getrocknetem Produkt durch den Prozess der Süßung oder Salinierung mit Diffusion stattfindet,
- Fördermittelgruppe, welche, indem sie auf der Heizkesselgruppe (30) positioniert ist, getrocknete Produkte in den Lösungspool (308) befördert, sie in dem Lösungspool (308) verarbeitet und im Gebrauch getrocknete Produkte zu der Trocknungs- und Rösteinheit (C) befördert,
und **dadurch gekennzeichnet, dass**
- die Heizkesselgruppe (30) Brenner (305) umfasst, die mit den Flanschen (304) verbunden sind, wodurch eine Erwärmung des Lösungspools (308) in dem Kessel (300) bereitgestellt wird; und Austauschereinheiten (303), die von den Brennern (305) erwärmt werden,
- die Heizkesselgruppe (30) einen Expansionstank (307) umfasst, der die Übertragung des erhitzten Öls mittels Überlaufen von der Kesselgruppe (30) aufgrund von Expansion im Falle des Vorhandenseins von Öl/öligem Aromastoff/Lösung vorsieht,
- die Heizkesselgruppe (30) eine Trenneinheit (306) umfasst, welche die Trennung von heißem Öl und Nahrungsmittelöl bereitstellt, weil heißes Öl die Trockennussprodukte schädigt,
- die Heizkesselgruppe (30) ein Überlaufrohr (301) in den oberen Teilen des Kessels (300) umfasst, in das wässrige oder ölige Lösung überführt werden kann, wenn sie überläuft, und im unteren Teil des Kessels (300) umfasst die Heizkesselgruppe (30) ein Flüssigkeitsauslassrohr (302), in welches die ölige oder wässrige Schmutzlösung überführt werden kann,
- wobei die Fördermittelgruppe eine Förderschneckengruppe (40) umfasst, die mindestens einen Förderschneckeneinlass (402) umfasst, in welchen getrocknetes Produkt zuzuführen ist, mindestens eine Förderschnecke (403), die getrocknetes Produkt mittels Kraft unter Verwendung von Antriebskraft in den Lösungspool (308) führt, mindestens ein durchlässiges Rohr (404), das Löcher aufweist, welche eine Wechselwirkung von getrocknetem Produkt mit dem Lösungspool (308) vorsehen, und in dessen Inneren sich die Förderschnecke (403) befindet, ein Auslassrohr (407), das sowohl das Filtern als auch den Transport des Saftes des Nassproduktes bereitstellt, welcher das durchlässige Rohr (404) passiert, und mit dem durchlässigen Rohr (404) verbunden ist, einen Ellenbogen (406), der eine Verbindung des durchlässigen Rohrs (404) und dem Auslassrohr (407) miteinander vorsieht und eine Neigung vorsieht, mindestens einen Flansch (405), der eine Zwischenverbindung der Rohre (404, 407) und des Ellenbogens (406) vorsieht, oder wobei die Fördermittelgruppe eine Tauchfördermittelgruppe (50) umfasst, die mindestens einen Taucheimer (500) mit perforierter Oberfläche aufweist, oder wobei die Fördermittelgruppe eine Pallettenfördermittelgruppe (60) umfasst, die mindestens eine Palette (600) mit perforierter Oberfläche aufweist.

2. Einheit (B) zum Salinieren/Süßen mit Diffusion nach Anspruch 1 und **dadurch gekennzeichnet, dass** das Zufuhrsystem (20) mindestens eine Schneckeneinlassgruppe (200) umfasst, die für die Fördermittelgruppe (40) und für das Bereitstellen der Überführung von getrocknetem Produkt, das von der Rohmaterialzubereitungseinheit (A) kommt, zu der Förderschneckengruppe (40) von Einheit (B) zum Salinieren/Süßen mit Diffusion geeignet ist.

3. Einheit (B) zum Salinieren/Süßen mit Diffusion nach Anspruch 1 und **dadurch gekennzeichnet, dass** die Schneckeneinlassgruppe (200) Folgendes umfasst:
- einen Bunker (2001), der mindestens ein Einlassrohr (2002) umfasst, in welches Trockenprodukt zuzuführen ist,
- eine Abdeckung (2003), welche den Bunker (2001) im oberen Teil oben abdeckt,
- eine Zufuhrschnecke (2007), welche das Trockenprodukt im Inneren des Bunkers (2001) durch Kraft antreibt,
- einen Schaft (2006), mit dem die Zufuhrschnecke (2007) verbunden ist,
- ein Auflager (2005), welches die Fixierung des Schaftes (2006) im Inneren des Bunkers (2001) vorsieht,
- einen Reduziermotor (2004), der den Antrieb zur Drehung des Schaftes (2006) vorsieht,
- einen Flansch (2008), der eine Verbindung von dem Auslassteil des Bunkers (2001) zu dem Förderschneckeneinlass (402) vorsieht.

4. Einheit (B) zum Salinieren/Süßen mit Diffusion nach Anspruch 1 und **dadurch gekennzeichnet, dass** Taucheimer (500), welche die Tauchfördermittelgruppe (50) umfasst, Taucheimer (500) sind, die mit einer Förderkette befördern, welche durch die nebeneinander aufgereihten Seitenteile verbunden ist.

5. Einheit (B) zum Salinieren/Süßen mit Diffusion nach Anspruch 1 und **dadurch gekennzeichnet, dass** die Tauchfördermittelgruppe (50) mindestens einen Zufuhrbunker (201) umfasst, der aus der Rohmaterialzubereitungseinheit (A) entnommenes Trockenprodukt zu den Taucheimern (500) führt.

6. Einheit (B) zum Salinieren/Süßen mit Diffusion nach Anspruch 1 und **dadurch gekennzeichnet, dass** die Pallettenfördermittelgruppe (60) ein Fördermittel (601) umfasst, das den Transport der Pallete(n) (600) vorsieht, indem es bewegt wird.

7. Einheit (B) zum Salinieren/Süßen mit Diffusion nach Anspruch 1 und **dadurch gekennzeichnet, dass** sie eine Filtergruppe (70) umfasst, die eine Reinigung der in dem Lösungspool (308) im Inneren der Heizkesselgruppe (30) gefundenen Lösung vorsieht.

8. Einheit (B) zum Salinieren/Süßen mit Diffusion nach Anspruch 7 und **dadurch gekennzeichnet, dass** die Filtergruppe (70) Folgendes umfasst:
- einen Schmutzlösungseinlass (704) zum Vorsehen des Einlasses von Pulpelösung, die von dem Lösungspool (308) kommt, in das System,
- einen Filter (700) zum Filtern der Schmutzlösung,
- eine Schmutzfilterrolle (706), auf die der Schmutzfilter (702) gewickelt wird, die in dem Fall, dass eine Okklusion in dem Filter (700) stattfindet, automatisch über den Schaft (703) kreuzt,
- Drehschäfte (703), die vorsehen, dass sauberer und neuer Filter (700) von der Filterrolle (701) gebracht wird, nachdem der Schmutzfilter (702) aufgewickelt ist,
- ein Reinlösungsauslass (705) zum Vorsehen des Auslasses von gefilterter Lösung in den Lösungspool (308) zur Zirkulation.

## Revendications

1. Unité (B) de salinisation-édulcoration avec diffusion, pour rester entre une unité de préparation de matière première (A) et une unité de séchage et de torréfaction (C), positionnée dans un système de préparation de noix sèches, donnant des produits alimentaires secs ou torréfiés tels que des fruits secs, des noix sèches, un goût aromatique salé ou sucré ou épicé au moyen du procédé de diffusion de la solution jusqu'à l'intérieur des graines, et comprenant ;
- un système d'amenée (20) qui, pendant l'utilisation, provient de ladite unité de préparation de matière première (A) et amène le produit à base de noix sèches avec leur coque, qui sera transformé en noix sèches, à l'unité (B) d'édulcoration avec diffusion dans une certaine quantité et avec des intervalles de temps spécifiques,
- un groupe chaudière chauffé (30) qui comprend au moins une chaudière (300) comprenant un bassin de solution (308) à l'intérieur duquel une opération d'ébullition de produit sec par le processus d'édulcoration ou de salinisation avec diffusion se produit,
- un groupe transporteur qui transporte, en étant positionné sur ledit groupe chaudière chauffé (30), des produits secs dans le bassin de solution (308), les traitant à l'intérieur du bassin de solution (308) et, pendant l'utilisation, transporte les produits secs vers l'unité de séchage et de torréfaction de produits (C),
**caractérisée en ce que** ;
- ledit groupe chaudière chauffé (30) comprend des brûleurs (305) raccordés aux brides (304) fournissant un réchauffement du bassin de solution (308) à l'intérieur de la chaudière (300) ; et des échangeurs (303) réchauffés par lesdits brûleurs (305),
- ledit groupe chaudière chauffé (30) comprend une cuve d'expansion (307) fournissant le transfert de l'huile chauffée au moyen d'un trop-plein du groupe chaudière (30) dû à l'expansion dans le cas de la présence d'huile / d'agent aromatisant huileux / de solution,
- ledit groupe chaudière chauffé (30) comprend un séparateur (306) fournissant une séparation de l'huile chaude et de l'huile alimentaire car l'huile chaude endommagera les produits à base de noix sèches,
- ledit groupe chaudière chauffé (30) comprend un tuyau de trop-plein (301) dans les parties supérieures de la chaudière (300) dans lequel une solution aqueuse ou huileuse peut être transférée quand elle déborde, et dans la partie inférieure de la chaudière (300), ledit groupe chaudière chauffé (30) comprenant un tuyau de sortie de liquide (302) dans lequel la solution huileuse ou aqueuse viciée peut être transférée,
- ledit groupe transporteur comprenant un groupe transporteur à vis (40) possédant ; au moins une entrée de transporteur à vis (402) dans laquelle le produit sec doit être admis ; au moins une vis de transporteur (403) qui emmène le produit sec dans le bassin de solution (308) par la force, en utilisant une force d'entraînement ; au moins un tuyau perméable (404) qui comprend des orifices fournissant une interaction de produit sec avec le bassin de solution (308) et où ladite vis de transport (403) se trouve à l'intérieur dudit tuyau perméable (404) ; un tuyau de sortie (407) qui fournit à la fois une filtration et un transport du jus du produit mouillé passant à travers ledit tuyau perméable (404), et est raccordé au tuyau perméable (404) ; un coude (406) qui fournit une connexion entre ledit tuyau perméable (404) et le tuyau de sortie (407) et fournit une inclinaison ; et au moins une bride (405) qui fournit une connexion intermédiaire desdits tuyaux (404, 407) et du coude (406) ou dudit groupe transporteur comprenant un groupe transporteur immergé (50) ayant au moins un godet pour immersion (500) avec une surface perforée ou ledit groupe transporteur comprenant un groupe transporteur palettisé (60) ayant au moins une palette (600) avec une surface perforée.

2. Unité (B) de salinisation-édulcoration avec diffusion selon la revendication 1 et **caractérisée en ce que** ledit système d'amenée (20) comprend au moins un groupe d'entrée à vis (200), approprié pour ledit groupe transporteur (40) et approprié pour fournir un transfert de produit sec provenant de ladite unité de préparation de matière première (A) au dit groupe transporteur à vis (40) de l'unité (B) de salinisation-édulcoration avec diffusion.

3. Unité (B) de salinisation-édulcoration avec diffusion selon la revendication 1 et **caractérisée en ce que** ledit groupe d'entrée à vis (200) comprend :
- un silo (2001) comprenant au moins un tuyau d'entrée (2002) dans lequel un produit sec doit être admis,
- un couvercle (2003) couvrant le dessus du silo (2001) dans la partie supérieure,
- une vis d'amenée (2007) entraînant un produit sec à l'intérieur du silo (2001) par la force,
- un arbre (2006) auquel la vis d'amenée (2007) est raccordée,
- un roulement (2005) fournissant une fixation dudit arbre (2006) à l'intérieur du silo (2001),
- un moteur réducteur (2004) fournissant un mouvement de rotation au dit arbre (2006),
- une bride (2008) fournissant une connexion de la partie de sortie dudit silo (2001) à ladite entrée du transporteur à vis (402).

4. Unité (B) de salinisation-édulcoration avec diffusion selon la revendication 1 et **caractérisée en ce que** les godets pour immersion (500) que ledit groupe transporteur immergé (50) comprend sont des godets pour immersion (500) qui transportent avec un transporteur à chaîne raccordé par les parties latérales alignées les unes à côté des autres.

5. Unité (B) de salinisation-édulcoration avec diffusion selon la revendication 4 et **caractérisée en ce que** ledit groupe transporteur immergé (50) comprend au moins un silo d'amenée (201) qui, pendant l'utilisation, amène un produit sec pris de l'unité de préparation de matière première (A) aux godets pour immersion (500).

6. Unité (B) de salinisation-édulcoration avec diffusion selon la revendication 1 et **caractérisée en ce que** ledit groupe transporteur palettisé (60) comprend un transporteur (601) fournissant le transport de ladite/desdites palette(s) (600) au moyen d'un déplacement.

7. Unité (B) de salinisation-édulcoration avec diffusion selon la revendication 1 et **caractérisée en ce qu'**elle comprend un groupe de filtration (70) fournissant le nettoyage de la solution trouvée dans le bassin de solution (308) à l'intérieur dudit groupe chaudière chauffé (30).

8. Unité (B) de salinisation-édulcoration avec diffusion selon la revendication 7 et **caractérisée en ce que** ledit groupe de filtration (70) comprend ;
- une entrée de solution viciée (704) pour fournir une entrée de solution sous forme de pulpe provenant du bassin de solution (308) dans le système,
- un filtre (700) pour filtrer la solution viciée,
- un rouleau pour filtre vicié (706) sur lequel le filtre vicié (702) s'enroule, croisant automatiquement par-dessus l'arbre (703) dans le cas où il se produirait un blocage dans ledit filtre (700),
- des arbres rotatifs (703) fournissant un filtre propre et neuf (700) étant amené du rouleau de filtre (701) après que le filtre vicié (702) ait été enroulé,
- une sortie de solution propre (705) pour fournir une sortie de la solution filtrée dans le bassin de solution (308) pour circulation.
